**Europäisches Patentamt**

(19) **European Patent Office**

**Office européen des brevets**

(11) Numéro de publication : **0 130 854**
**B1**

(12) **FASCICULE DE BREVET EUROPÉEN**

(45) Date de publication du fascicule du brevet :
**19.07.89**

(21) Numéro de dépôt : **84400834.2**

(22) Date de dépôt : **25.04.84**

(51) Int. Cl.⁴ : **B 09 B 3/00**, C 02 F 11/00

(54) **Procédé de solidification de déchets liquides de forte acidité ou alcalinité.**

(30) Priorité : **03.05.83 FR 8307311**

(43) Date de publication de la demande :
**09.01.85 Bulletin 85/02**

(45) Mention de la délivrance du brevet :
**19.07.89 Bulletin 89/29**

(84) Etats contractants désignés :
**BE CH DE GB IT LI NL SE**

(56) Documents cités :
**EP--A-- 0 001 499**
**EP--A-- 0 038 235**
**DE--A-- 2 930 602**
**FR--A-- 2 466 564**
**FR--A-- 2 515 076**
**US--A-- 4 149 968**

(73) Titulaire : **Pichat, Philippe**
**18, rue des Tournelles**
**F-75004 Paris (FR)**

(72) Inventeur : **Pichat, Philippe**
**18, rue des Tournelles**
**F-75004 Paris (FR)**

(74) Mandataire : **Cuer, André**
**CABINET CUER 30, rue de Léningrad**
**F-75008 Paris (FR)**

Jouve, 18, rue St-Denis, 75001 Paris, France

**Description**

La présente invention a trait au domaine du traitement des déchets liquides, de diverses origines telles que industrielles, agricoles ou municipales. Elle concerne tout spécialement un procédé permettant de transformer des déchets fortement acides, de pH généralement inférieur à 2, ou des déchets très basiques et alcalins, de pH généralement supérieur à 12, en matériaux solides de grande stabilité à l'égard des agents extérieurs tels que l'eau et à fort pouvoir de rétention pour les éléments polluants inclus dans ces déchets.

Afin de résoudre le problème, de plus en plus préoccupant, du danger constitué par les déchets et résidus de tous types à l'égard de l'environnement et des êtres vivants, on a préconisé divers traitements de ces déchets, notamment par solidification physico-chimique, par exemple par mélange aux boues ou pâtes de résidus avec divers ingrédients tels que : ciments, silicate de sodium additionné d'un agent de prise, gypse ou plâtre, bitumes, laitiers métallurgiques, etc.

Plus récemment, on a proposé un intéressant procédé de pétrification, tout spécialement applicable à des déchets aqueux très acides, qui consiste à mélanger tout d'abord le déchet à une cendre de volante de charbon puis à neutraliser à pH sensiblement neutre et à ajouter ensuite un liant contenant de la chaux (FR-A-2 466 564).

Dans ce procédé, ainsi d'ailleurs que dans divers autres documents antérieurs, on a suggéré d'utiliser — parmi d'autres ajouts — de l'argile. Toutefois cette argile est toujours mise en œuvre simultanément à l'ajout du liant (chaux, ciment..., etc) et après que l'on ait neutralisé le déchet si ce dernier n'est pas sensiblement neutre (voir par exemple : DE-A-2 930 602 et US-A-4 149 968). Or une telle technique présente de nombreux inconvénients tels que notamment : les difficultés de mélange de l'argile avec le liant hydraulique, la nécessité d'emploi de quantités assez importantes d'agent neutralisant et l'utilisation, dans de biens mauvaises conditions, des caractéristiques physico-chimiques des matériaux argileux pour fixer les éléments polluants des déchets.

Il a maintenant été trouvé et constaté, de façon surprenante, que lorsque l'argile était utilisée directement, avant toute neutralisation et addition de liant hydraulique ou calcique, dans un déchet aqueux soit très acide soit fortement alcalin, il se produisait non pas un simple enrobage des éléments polluants mais une série de phénomènes d'absorption, de chimie-sorption, de complexation et/ou coprécipitation favorables à la stabilisation des produits polluants. En outre, on a pu noter que d'une part les argiles avaient une réactivité de surface très élevée lors de ce prémélange, ce qui favorisait la réaction ultérieure avec la chaux ou autre liant et que, d'autre part, les temps de pétrification étaient sensiblement moins élevés et les propriétés mécaniques plus favorables.

Conformément au procédé de l'invention, applicable aux déchets très acides (pH ≤ 2) ou très basiques (pH ≥ 12), on disperse sous agitation — dans un premier temps — un matériau argileux cru ou séché dans le déchet (ou vice-versa) à température de 0 °C à 150 °C, puis, en particulier dans le cas des déchets acides, on neutralise à pH sensiblement neutre, et l'on procède ensuite à l'addition d'un liant hydraulique et/ou calcique.

On peut utiliser tous types d'argiles crues ou séchées telles que des argiles pures (kaolinites..., etc.) ou plus généralement des mélanges appartenant aux principaux groupes minéralogiques : montmorillonites, illites, smectites, chlorites, vermiculites, sépiolites, attapulgites... et qui peuvent contenir diverses impuretés telles que des hydroxydes, carbonates métalliques, etc. Il est particulièrement avantageux, au plan du coût, de mettre en œuvre divers déchets d'argiles techniques, de déchets de carrière et aux produits argileux provenant de lavage de matériaux. On notera que les argiles cuites, comme par exemple la vermiculite expansée (EP-A-0 001 499), ne peuvent convenir dans le cadre de l'invention.

Sous l'influence des protons, dans le cas des déchets acides, la surface des particules d'argile est augmentée au cours de la première phase précitée. Il y a formation de silice, d'ions $Fe^{3+}$, $Al^{3+}$, $Ca^{2+}$, $Mg^{2+}$. Le pH de la solution augmente et les éléments polluants du déchet se fixent sur les surfaces externes et internes des argiles et sur les ions $Fe^{3+}$, $Al^{3+}$..., etc. et leurs composés, qui proviennent de l'attaque superficielle des argiles.

Dans le cas où les résidus de départ sont fortement basiques, la surface des particules d'argiles est augmentée sous l'influence, notamment, des ions $OH^-$ car il y a formation en particulier de silicates solubles et d'aluminates alcalins. Le pH de la solution a tendance à baisser et les éléments polluants du déchet se fixent sur les surfaces externe et interne des argiles.

Les durées et temps de contact lors de la première phase réactionnelle argile/déchet sont évidemment variables selon le type de matière première et selon les paramètres : température, vitesse d'agitation, quantités de matériaux. Par exemple, la réaction est immédiate lorsqu'on utilise des argiles magnésiennes (types sépiolite, attapalgite) alors qu'elle est plus longue, par exemple quelques heures, pour d'autres argiles ou déchets argileux.

En pratique, cette première étape s'effectue à température et pression ordinaires, par exemple entre 15 et 30 °C mais on peut opérer jusqu'à 0 °C et moins ou, au contraire, accélérer les réactions par chauffage. On disperse l'argile dans le déchet (ou vice-versa dans certains cas) de préférence sous une forte agitation, par exemple avec un système d'agitation fournissant au moins 1 000 tours/minute de façon à obtenir une vitesse linéaire périphérique des particules de l'ordre de 10 à 15 mètres/seconde.

Conformément à la deuxième étape du procédé de l'invention on neutralise la masse pâteuse encore acide jusqu'au voisinage de la neutralité. Cette neutralisation peut se faire par des produits tels que : de la chaux (vive ou éteinte), du calcaire broyé, des résidus à base de carbonate de calcium, des silicates et/ou aluminates de calcium. Cette phase s'accompagne de diverses réactions de précipitation et d'absorption compte tenu des importantes surfaces spécifiques développées.

La neutralisation n'est pas indispensable lorsque le déchet à traiter est du type fortement basique. Mais on peut avantageusement dans un tel cas opérer une neutralisation à l'aide d'un déchet acide ou encore d'un mélange de déchet acide et d'argile tel que par exemple celui ou ceux visés ci-dessus. De même la neutralisation du déchet acide peut se faire également par un mélange de déchet basique et d'argile.

Enfin, selon la troisième et dernière étape du procédé, la masse pâteuse, éventuellement neutralisée comme dit ci-dessus, est additionnée, sous agitation, d'un liant hydraulique ou calcique. Parmi les produits utilisables à cet effet on peut citer à titre non limitatif : chaux vive, résidus de fabrication de chaux vive ou d'acétylène, chaux hydraulique naturelle, ciment Portland, laitiers de haut-fourneau et d'aciéries, ciments aux laitiers, cendres volantes de combustion du charbon, de lignite, d'ordures, plâtres..., etc. Cette addition ne provoque pas un simple enrobage des éléments polluants mais donne lieu à des phénomènes d'absorption, de chimie-sorption, de complexation et de coprécipitation favorables à la stabilisation des éléments polluants. Cette addition de liant peut se faire par exemple, entre autres moyens, par un agitateur du type à socle de charrue à l'intérieur d'un malaxeur horizontal à béton ou encore dans un malaxeur de type routier fonctionnant en continu ou en discontinu.

En pratique, les quantités de chaux ou de donneur de chaux mises en œuvre dans le procédé sont avantageusement choisies pour que l'on ait un rapport argile/Ca $(OH)_2 \geqslant 4$ et pouvant atteindre jusqu'à 25.

L'évacuation et le transport du déchet traité se font par exemple à l'aide d'une pompe à pistons du type KOR 1000 qui est alimentée par un malaxeur gaveur. Le transport du déchet est de préférence effectué pendant la prise et avant la pétrification ; il est préférable que la masse en cours de prise soit compactée ou tassée avant sa mise en place définitive.

Le procédé selon l'invention permet de traiter tous types de déchets liquides soit de forte acidité (souvent pH < 0) soit très basiques et alcalins (pH > 12) et d'origine quelconque : industrielle, minière, urbaine et de caractère anorganique, organique ou biologique. Ils peuvent contenir divers cations et/ou anions ou encore des composés organiques tels que protides, lipides, glucides, hydrocarbures divers. Enfin les déchets à traiter peuvent être radioactifs.

L'invention sera mieux comprise par la description détaillée d'exemples de réalisation, cités à titre limitatif, qui ont trait à des traitements de déchets de compositions et sources diverses.

## Exemples illustratifs

Dans les exemples qui suivent et correspondent à des compositions de déchets précisées ci-après, on a évalué l'efficacité du traitement de solidification par deux types de test : soit la lixiviation statique, qui simule l'action d'une nappe phréatique, selon E.D. Harpe (I.A.E.A. Atomic Energy Review, vol. 9, n° 1, 1971) ; soit le test dynamique E.P.A. (US Federal Register, 18 décembre 1978, part. IV) consistant à agiter le déchet solidifié dans de l'eau, à corriger éventuellement le pH puis à soumettre à l'analyse des produits lixiviés.

Les essais ont été effectués, sauf indications contraires, sur des échantillons ayant 28 jours. On notera par ailleurs que, dans tous les cas, la résistance à la compression des échantillons correspondant à ces exemples était supérieure à 3 mégapascal (MPa).

## Exemple n° 1

Cet exemple établit la comparaison entre la technique connue de neutralisation préalable du déchet puis d'addition d'argile et de liant hydraulique ou calcique et le procédé selon l'invention avec la phase préliminaire de réaction entre l'argile et le déchet.

Le déchet I était de type fortement acide (pH = 0) et provenait de l'industrie de traitement de surface (décapage du fer). Il était caractérisé par les concentrations suivantes en cations et anions (en mg/l $\times 10^3$) :

| | |
|---|---|
| Cu : 0,22 | Cd : 0,001 |
| Fe : 0,9 | Ni : 0,5 |
| Zn : 0,4 | Mn : 0,0005 |
| Cr : 0,35 | $SO_4^{2-}$ : 165 |

a) Dans un premier essai, on a neutralisé 100 g de ce déchet I avec 33,8 g de CaO. Puis on a ajouté, toujours sous agitation, 26 g d'une argile polychrome sèche et 3 g de liant calcique (CaO) pour créer des liaisons pouzzolaniques. La durée de malaxage était de cinq minutes. La solidification a eu lieu en 4 jours et l'on a obtenu, après lixiviation, les résultats suivants (en mg/l) :

3

| | |
|---|---|
| Cu : 0,75 | Cd : 1,7 |
| Fe : 3,75 | Ni : 0,75 |
| Zn : 0,12 | Mn : 0,6 |

b) Cette fois-ci on a mélangé, en malaxeur type béton, directement 100 g du même déchet I avec 20 g de l'argile polychrome sèche et l'on a laissé réagir pendant 3 jours. On a ensuite neutralisé et constaté qu'il suffisait de 28 g de CaO pour cette opération. Le liant a ensuite été ajouté sous malaxage pendant 5 minutes (6 g de CaO) et la solidification s'est faite en 3 jours.

c) Dans cet essai, on a effectué une mise en œuvre différente en dispersant, cette fois-ci, 20 g d'argile dans 100 g du déchet I avec un agitateur Moritz à turbine tournant à 2 000 tours/minute. Il suffisait alors de 27,5 g de CaO pour neutraliser et l'on a ajouté ensuite 3 g seulement de CaO comme liant en malaxant pendant cinq minutes.

On a amélioré sensiblement les résultats d'analyse après lixiviation :

| | |
|---|---|
| Cu : 0,50 | Cd : 1,4 |
| Fe : 3 | Ni : 0,50 |
| Zn : 0,12 | Mn : 0,50 |

d) On a encore pu améliorer ces résultats de lixiviation et diminuer la quantité de chaux vive en augmentant quelque peu la proportion d'argile jusqu'à la limite d'obtention d'un mélange homogène.

En effet, dans 100 g du déchet I on a dispersé 26 g d'argile polychrome et il a suffi d'ajouter 25,7 g de CaO pour la neutralisation. Le liant ultérieur était constitué par 3 g de CaO. Les résultats de lixiviation sont donnés ci-dessous :

| | |
|---|---|
| Cu : 0,25 | Cd : 1,0 |
| Fe : 2,75 | Ni : 0,50 |
| Zn : 0,12 | Mn : 0,40 |

En outre, on a constaté que, vingt-quatre heures après les essais, les échantillons des exemples b), c) et d) étaient solidifiés alors que l'échantillon de l'exemple a) ne l'était pas. L'échantillon de l'essai d) était le plus dur (mesure à l'aiguille de Vicat).

## Exemple n° 2

On a traité ici un déchet II provenant d'un atelier de décapage d'acier inoxydable. Il s'agissait d'une solution d'acide fluorhydrique et d'acide nitrique de concentration en $H^+$ : 1,39 mole.

a) Selon la méthode antérieurement connue, on a neutralisé 100 g du déchet II à la chaux (11,5 g de CaO) puis agité avec 180 g d'argile de type vermiculite contenant du quartz, de capacité cationique plus faible que la polychrome précédente. On a ensuite malaxé pendant cinq minutes avec 25 g de ciment Portland. La résistance à la compression après dix jours était de 4 mPa (norme AFNOR P 15413).

b) Selon le procédé de l'invention on a laissé réagir pendant cinq heures un mélange de 100 g du déchet II avec 180 g de la même argile. On a constaté que, lors de la neutralisation, 10 g de CaO suffisaient. Le liant était également constitué par 25 g de ciment Portland, avec une durée de malaxage de cinq minutes. La résistance à la compression était alors passée à 5,8 mPA (au lieu de 4).

## Exemple n° 3

On a traité cette fois-ci un autre déchet acide III de caractéristiques suivantes (en g/l) et provenant d'un décapage d'acier :

| | |
|---|---|
| Cu : 9,4 | Cr : 1,6 |
| Fe : 81 | Cd : 0,03 |
| Zn : 7,6 | Ni : 0,63 |
| pH : 0 | |

On a traité 100 g de ce déchet par 11,7 g d'une marne argileuse. Il s'est produit immédiatement un dégagement de gaz carbonique. On a constaté que la neutralisation s'effectuait d'elle-même. On a alors ajouté 30 g de ciment Portland.

On a obtenu les résultats suivants de lixiviation après 8 jours (concentration en mg/l) :

| | |
|---|---|
| Cu : 0,2 | Cr : 0,1 |
| Fe : 1,2 | Cd : 0,3 |
| Zn : 0,3 | Ni : 0,7 |
| pH : 8 | |

Les résultats peuvent encore être améliorés par utilisation d'une quantité plus importante de marne.

La solidification s'est faite ici en six jours, malgré la très faible proportion de marne ajoutée.

## Exemple n° 4

On a travaillé sur un déchet IV provenant d'un atelier de chimie fine et renfermant notamment des produits tels que : acide sulfurique, dichloronitrobenzène. Le pH était de 0 et la DCO (demande chimique en oxygène) de 100 000 mg/l.

On a opéré selon le procédé de l'invention en utilisant une argile de type sépiolite qui réagissait en quelques minutes et avait une capacité d'échange cationique de 210. Le liant était constitué par de la chaux. On a effectué 2 séries d'essais sur les quantités suivantes de produits :

4.1. 100 g de déchet, 22 g d'argile, 11 g de CaO
4.2. 100 g de déchet, 11 g d'argile, 11 g de CaO

On a obtenu les résultats de lixiviation suivants après une semaine :

DCO : 1 660 mg/l pour l'essai 4.1
3 270 mg/l pour l'essai 4.2

L'échantillon correspondant à 4.1 était solidifié en 6 jours alors que celui correspondant à 4.2 était solidifié en 9 jours.

## Exemple n° 5

On a traité le même déchet IV en utilisant comme argile la marne de l'exemple 3 et en mettant en œuvre comme liant du laitier ou du plâtre, avec les quantités suivantes de produits :

100 g déchet + 22 g d'argile + 13,3 g de CaO (neutralisant) + 25 g de laitier broyé (finesse 2 500 Blaine)
100 g de déchet + mêmes constituants mais 40 g de plâtre (au lieu du laitier)
Après une semaine, les résultats de lixiviation ont donné :

DCO : 1 680 mg/l pour le premier échantillon
1 800 mg/l pour le second échantillon

## Exemple n° 5

On pourra voir dans cet exemple l'intérêt qu'il peut y avoir, dans certains cas, à chauffer la dispersion d'argile dans le déchet très acide (ou également très basique).

Le déchet V ici en cause était très acide et provenait d'un atelier de traitement de surface. Ses caractéristiques peuvent être résumées comme suit (quantités en mg/l) :

| | |
|---|---|
| Cu : 2,1 | Ni : 1,1 |
| Zn : 2,6 | Mn : 0,5 |
| Cd : 0,05 | DCO : 575 |

pH : 0

Dans un premier type de traitement, on a dispersé 16 g d'argile polychrome dans 100 g du déchet et il a fallu ensuite 9 g de CaO pour élever le pH à 7 environ. On a ensuite ajouté comme liant 25 g de ciment Portland.

Dans le second essai, on a chauffé le mélange d'argile et de déchet pendant 8 heures à 180 °C. Il suffisait alors d'utiliser 8 g de CaO pour atteindre le pH de 7. On a ensuite ajouté, comme ci-dessus, 25 g de ciment Portland.

Le test I.A.E.A. de lixiviation, après 14 jours, a montré qu'il n'y avait pratiquement plus de trace des cations ci-dessus, sauf pour le premier essai (sans chauffage) 0,05 mg/l de Zn (mesures effectuées par absorption atomique).

## Exemple n° 6

On s'est attaché alors au traitement d'un déchet VI très alcalin constitué essentiellement par de la soude de nettoyage des tôles dans une usine automobile. Le pH était de 14, la DCO : 50 000 mg/l la concentration en zinc de 187,5 mg/l, celle en plomb était de 1,15 mg/l, et la teneur en phénol de 70 mg/l.

A 100 g de ce déchet on a ajouté 40 g d'argile grise (à base de montmorillonite et de chlorite) de capacité cationique d'échange 560. On a ensuite porté à l'ébullition pendant 15 minutes puis laissé refroidir une heure et l'on a ajouté ensuite 30 g de laitier broyé et 10 g de plâtre puis on a malaxé pendant cinq minutes.

La lixiviation après 8 jours a montré que la DCO était passée à 60, la concentration en ions OH était de 1 et le pourcentage de zinc était tombé à 0,1 (tous ces chiffres correspondant à des mg/l).

### Exemple n° 7

Cet exemple illustre la neutralisation d'un déchet fortement basique après sa réaction avec une argile, à l'aide d'une suspension d'argile dans un déchet acide.

On est parti tout d'abord d'un déchet basique VII provenant d'un atelier de chimie fine, de pH 12, contenant 150 g/l de NaoH et présentant une DCO de 80 000 mg/l. On a dispersé, sous agitation à 1 200 tours/minute, 120 g d'argile (à base de chlorite, montmorillonite, quartz, illite) de capacité d'échange cationique de 156, dans 100 g de déchet.

Par ailleurs, on a agité dans les mêmes conditions 120 g de la même argile dans 100 g d'un déchet acide VIII provenant d'une usine de construction automobile et de caractéristiques suivantes (concentrations en mg/l) :

Zn : 22          Ni : 1 800
Cu : 50          Mn : 210
Fe : 22 500          $NO_2^-$ : 2

DCO : 3 000

Il a fallu 182 g de ce mélange déchet acide-argile pour neutraliser 100 g du mélange ci-dessus de déchet basique et d'argile. Le liant ultérieurement utilisé était constitué par 9 g de cendres volantes de lignite. La pétrification a duré six heures.

Après lixiviation on a obtenu les résultats suivants :

Zn : 0,07          Ni : 1,20
Cu : 0,35          Mn : 0,30
Fe : 0,30          $NO_2$ : < 0,01
pH : 6          DCO : 340

### Exemple N° 8

Cet exemple est du même type que le précédent avec des matières premières et des conditions de mise en œuvre différentes.

On est parti d'un déchet IX de boue issue d'une usine de traitement de déchets et présentant un pH de 13. Les concentrations (en $10^3$ mg/l) des constituants essentiels étaient les suivantes :

Fe : 175          Mn : 85
Zn : 1,75          Ni : 27
Cr : 35          Cd : 2,2
          Cu : 95
          DCO : 75 000 mg/l

On a neutralisé 100 g de ce déchet avec 50 g d'un mélange acide préparé par dispersion à 2 000 tours/minute d'un déchet acide X de pH : 0 et d'argile polychrome. La concentration des éléments essentiels dans ce déchet était la suivante (en $10^3$ mg/l) :

Fe : 81          Mn : 0,6
Zn : 7,6          Ni : 0,6
Cr : 1,6          Cd : $3,8 \times 10^{-3}$
          Cu : 9,4

On a utilisé ensuite comme liant hydraulique 25 g de ciment Portland.

Les analyses après lixiviation d'un échantillon de 18 mois ont donné les résultats suivants :

Cu : 0          Cd : 0
Fe : 0          Ni : 0
Zn : 0          Mn : 0
DCO : 380          pH : 7
          (mesures faites par absorption atomiques)

### Exemple N° 9

On a effectué ici des séries d'essais destinés notamment à faire varier les temps réactionnels entre le déchet et l'argile.

La matière première argileuse était de l'argile polychrome et l'on a travaillé sur le déchet acide III de l'exemple 3 ci-dessus, ceci dans les conditions suivantes :

| N° essai | 1ère phase | durée | neutralisation | 3è phase (liant) |
|---|---|---|---|---|
| 8.1 | 100 g déchet + 22 g argile | 7 jours | 14 g.CaO | 25 g. ciment |
| 8.2 | id | 48 heures | id | id |
| 8.3 | id | 48 heures | id | 15 g. ciment |
| 8.4 | id | 48 heures | id | 10 g. ciment |

Le ciment mis en œuvre était du ciment Portland.

Après lixiviation, on a obtenu les résultats suivants (concentrations en mg/l) :

| Echantillon | Cu | Fe | Zn | Pb | Cd | Ni | Mn |
|---|---|---|---|---|---|---|---|
| 8.1 | traces | 1 | 0,2 | — | 0,5 | 1 | 0,2 |
| .8.2 | 0,25 | 2 | 0,7 | — | 1 | 3 | 0,3 |
| 8.3 | 0,25 | 2,25 | 1,25 | — | 1 | 3 | 0,35 |
| 8.4 | 0,25 | 2,25 | 1,50 | — | 1 | 3 | 0,40 |

Ces essais montrent l'intérêt qu'il peut y avoir à laisser réagir plus longtemps le déchet et l'argile lors de la première phase opératoire selon l'invention.

Par ailleurs, les résultats montrent également l'importance de cette première phase de fixation du déchet sur l'argile et la flexibilité du procédé lors de la troisième phase dite de solidification ou pétrification. Par contre, la vitesse de pétrification dépend bien entendu de la quantité de liant utilisée lors de cette troisième phase et elle décroît nettement en passant des essais nos 8.2 à 8.4, l'échantillon 8.2 étant le premier à être solidifié après quatre jours seulement.

Diverses variantes peuvent bien entendu être envisagées dans la mise en œuvre du procédé selon l'invention. Par exemple, à titre non limitatif, on notera que la neutralisation du déchet fortement basique peut être faite par un mélange de déchet acide et de cendres volantes de charbon tel que par exemple du type selon le FR-A-2.466.564.

**Revendications**

1. Procédé de solidification de déchets liquides soit très acides (pH ⩽ 2) soit fortement basiques (pH ⩾ 12), en matériaux solides stables, non polluants et résistant à la lixiviation par l'eau, caractérisé en ce que, dans un premier temps, on disperse sous agitation un matériau cru ou séché dans le déchet ou vice-versa, à température de 0 à 150 °C puis, en particulier dans le cas de déchets acides, on neutralise à pH sensiblement neutre et l'on procède enfin, selon une troisième phase, à l'addition d'un liant hydraulique et/ou calcique.

2. Procédé selon la revendication 1, caractérisé en ce que l'on utilise comme matériau argileux au moins l'une des argiles pures ou mélanges des principaux groupes minéralogiques ou encore des déchets d'argiles techniques, de carrière, ou de lavage de sables argileux.

3. Procédé selon l'une quelconque des revendications 1 ou 2, caractérisé en ce que la neutralisation est faite par des produits choisis dans le groupe : chaux (vive ou éteinte), calcaire broyé, résidus à base de carbonate de calcium, silicates et/ou aluminates de calcium.

4. Procédé selon la revendication 1, caractérisé en ce que dans le cas d'un déchet basique, la neutralisation est faite à l'aide d'un déchet acide ou d'un mélange de déchet acide soit avec de l'argile soit avec des cendres volantes de charbon.

5. Procédé selon l'une quelconque des revendications 1 à 3, caractérisé en ce que la neutralisation du déchet acide est faite à l'aide d'un mélange de déchet basique et d'argile.

6. Procédé selon l'une quelconque des revendications 1 à 5, caractérisé en ce que le liant, lors de la troisième phase, est choisi dans le groupe : chaux (vive ou éteinte), ciment Portland, laitiers de haut-fourneau, ou d'aciérie, ciments aux laitiers, cendres volantes de charbon ou lignite, plâtre.

7. Procédé selon la revendication 6 caractérisé en ce que les quantités de chaux ou de donneur de chaux mises en œuvre sont telles que l'on ait un rapport : argile/Ca $(OH)_2$ ⩾ 4 et pouvant atteindre jusqu'à 25.

## Claims

1. Process for the solidification of very acidic liquid wastes having a pH of less than or equal to about 2 or strongly basic liquid wastes having a pH of greater than or equal to 12, into stable non-poluting solids which are resistant to leaching by water, characterized by the fact that : in a first time dispersing under agitation a clay material raw or dried in the waste, or vice-versa, at temperature between 0 and 150 ºC ; then, namely in case of acidic wastes, neutralizing the mixture to approximately neutral pH ; and finally, in a third phase, adding to the mixture a hydraulic and/or calcium binder.

2. Process according the claim 1, wherein said clay material is selected from the group consisting of pure clay, a mixture of clays of the main mineralogical groups, technical clay wastes, wastes from quarries, wastes from the wash of clay sands and mixtures thereof.

3. Process according any one of the claims 1 or 2, wherein the said neutralizing step is accomplished by the addition of an agent selected from the group consisting of : quicklime, slacked lime, ground limestone, calcium carbonate base residues, calcium silicates and calcium aluminates.

4. Process according to claim 1, wherein, in case of basic waste, the neutralizing step is accomplished with an acidic waste or a mixture of acidic waste either with clay material or with coal fly/ash.

5. Process according any one of the claims 1 to 3, wherein the neutralizing step of the acidic waste is accomplished with a mixture of basic waste and clay material.

6. Process according any one of the claims 1 to 5, wherein the binder, in the third phase, is selected from the group consisting of : quicklime, slacked lime, Portland cement, blast-furnace slag, steel-works slag, slag cement, coal or lignite fly ash and plaster.

7. Process according to claim 6, wherein the amount of calcium binder added is such that three is a ratio of clay to Ca $(OH)_2$ about 4 to about 25.

## Patentansprüche

1. Verfahren zum Erstarrenlassen entweder sehr saurer (pH $\leqslant$ 2) oder stark basischer (pH $\geqslant$ 12) flüssiger Abfälle als stabile, feste nicht verunreinigend wirkende Stoffe, die gegen Auslaugen durch Wasser resistent sind, dadurch gekennzeichnet, daß in einem ersten Zeitabschnitt man unter Rühren ein rohes oder trockenes Tonmaterial in den Abfall oder umgekehrt bei einer Temperatur von 0 bis 150° dispergiert und man insbesondere im Falle von saurer Abfällen auf pH = 0 neutralisiert und dann in einer dritten Phase ein hydraulisches und/oder kalziumhaltiges Bindemittel hinzufügt.

2. Verfahren nach Anspruch 1, dadurch gekennzeichnet, daß als Tonmaterial mindestens einer der reinen oder gemischten Tonstoffe des hauptsächlichen mineralischen Gruppen oder technische Tonabfälle verwendet, die aus einem Steinbruch oder aus dem Waschen von tonhaltigem Sand sich ergeben.

3. Verfahren nach einem der Ansprüche 1 und 2, dadurch gekennzeichnet, daß die Neutralisation mit Produkten aus der Gruppe : ungelöschter oder gelöschter Kalk, gemahlener Kalkstein, Reste auf der Basis von Kalziumkarbonat, Kalziumssilikate und/oder Kalziumaluminate durchgeführt wird.

4. Verfahren nach Anspruch 1, dadurch gekennzeichnet, daß im Falle von basischem Abfall die Neutralisation mittels eines sauren Abfalls oder eines sauren Gemisches mit Ton oder mit Kohleflugasche durchgeführt wird.

5. Verfahren nach einem der Ansprüche 1 bis 3, dadurch gekennzeichnet, daß die Neutralisation des sauren Abfalls mittels eines aus basischem Abfall und Ton bestehenden Gemisches durchgeführt wird.

6. Verfahren nach einem der Ansprüche 1 bis 5, dadurch gekennzeichnet, daß in der dritten Phase das Bindemittel aus der Gruppe : gelöschter oder ungelöschter Kalk, Portlandzement, Hochofenschlacke oder Stahlwerkschlacke, Schlackenzement, Kohle- oder Braunkohleflugasche, Gips ausgewählt wird.

7. Verfahren nach Anspruch 6, dadurch gekennzeichnet, daß die eingesetzten Mengen an Kalk oder an Kalkquelle so ausgwählt sind, daß das Verhältnis Ton/Ca $(OH)_2$ $\geqslant$ 4 ist und 25 erreichen kann.